# EUROPEAN PATENT APPLICATION

(11) **EP 3 264 692 A1**
(43) Date of publication of application: **03.01.2018**
(21) Application number: 15883120.6
(22) Date of filing: 23.02.2015
(51) Int. Cl.: H04L 12/66

(54) **COMMUNICATION MONITOR SYSTEM, GATEWAY DEVICE, AND COMMUNICATION MONITOR DEVICE**

(71) Applicant: Mitsubishi Electric Corporation, Chiyoda-ku Tokyo 100-8310 (JP)
(72) Inventor: SUZUKI Shigeki, Tokyo 100-8310 (JP)
(74) Representative: Studio Torta S.p.A.
(86) International application number: PCT/JP2015/055030
(87) International publication number: WO 2016/135822

(57) **Abstract**

A communication monitoring system (1) includes a gateway device (10) for relaying data communicated between the Internet (N1) and an in-home network (N2), and a communication monitoring device (20). The gateway device (10) includes a first communicator (11) and a second communicator (12) that respectively communicate with the Internet (N1) and the in-home network (N2), and a first outputter (13) and a second outputter (14) provided so as to correspond to the respective communicators, and respectively convert communicated data by the first communicator (11) and the second communicator (12) into optical signals having different wavelengths. The communication monitoring device (20) includes a first receiver (21) and a second receiver (22) that receive the optical signals output by the first outputter (13) and the second outputter (14), and a display (24) that displays information relating to the data obtained from the optical signal received by the first receiver (21) and the optical signal received by the second receiver (22).

## Description

### Technical Field

The present disclosure relates to a communication monitoring system, a gateway device, and a communication monitoring device that monitor data relayed between networks.

### Background Art

Gateway devices are known which are placed between networks, and which relay communicated data between the networks. For example, Patent Literature 1 discloses a gateway device which is placed between an out-home network and an in-home network. This gateway device creates a control instruction when receiving a control-instruction input from the out-home network, and transmits this instruction to a home electrical appliance connected to the in-home network.

### Citation List

### Patent Literature

Patent Literature 1: Unexamined Japanese Patent Application Kokai Publication No. 2002-44765

### Summary of Invention

### Technical Problem

According to systems provided with a gateway device, in order to, for example, analyze a cause when a communication failure occurs, and to check the communication, there is a demand to monitor the data relayed by the gateway device in a real-time manner. According to the gateway device disclosed in Patent Literature 1, since the control instruction to be transmitted to the in-home network is also transmitted to a monitor, the control instruction can be monitored in a real-time manner. However, data transmitted by the gateway device to the out-home network cannot be monitored in a real-time manner. That is, the gateway device disclosed in Patent Literature 1 is not capable of monitoring from the out-home network and from the in-home network, in a real-time manner, data relayed bi-directionally between the networks.

In addition, if a measuring instrument like a protocol analyzer is connected to the communication port of the gateway device to each network, communicated data from the respective networks can be monitored bi-directionally in a real-time manner. In this case, however, since at least two measuring instruments need to be connected to the single gateway device, greater costs are incurred, and a more complicated wiring configuration results in some time-consuming tasks. In addition, if such a measuring instrument were to be connected to the gateway device in a wireless scheme, cross-talk may occur between the measuring instruments and proper data may be unobtainable, for example.

The present disclosure is made in view of the foregoing circumstances, and an objective is to provide a communication monitoring system and the like, that are capable of easily monitoring data relayed bi-directionally without performing time-consuming wiring tasks and without incurring additional costs.

### Solution to Problem

In order to accomplish the above objective, a communication monitoring system includes:
a gateway device for relaying data that is communicated between a first network and a second network; and
a communication monitoring device,
wherein the gateway device comprises:
   a first communicator configured to communicate data with the first network;
   a second communicator configured to communicate data with the second network;
   a first outputter configured to convert the data communicated by the first communicator into an optical signal having a first wavelength and to output the optical signal; and
   a second outputter configured to convert the data communicated by the second communicator into an optical signal having a second wavelength different from the first wavelength and to output the optical signal, and
wherein the communication monitoring device comprises:
   a first receiver configured to receive the optical signal output by the first outputter;
   a second receiver configured to receive the optical signal output by the second outputter; and
   a display configured to display information relating to the data obtained from the optical signal received by the first receiver and the optical signal received by the second receiver.

### Advantageous Effects of Invention

According to the present disclosure, relayed data can be easily monitored bi-directionally without performing time-consuming wiring tasks and without incurring additional costs.

### Brief Description of Drawings

FIG. 1 is a diagram illustrating an overall configuration of a communication monitoring system according to an embodiment of the present disclosure;
FIG. 2 is a block diagram illustrating a configuration of a gateway device and that of a communication monitoring device;
FIG. 3 is a flowchart illustrating a procedure of a relaying process;
FIG. 4 is a diagram illustrating a specific example of the relaying process; and
FIG. 5 is a diagram illustrating an example of a communication monitoring screen.

### Description of Embodiments

Embodiments of the present disclosure are described below in detail with reference to the drawings. Note that the same or corresponding element is denoted by the same reference numeral throughout the drawings.

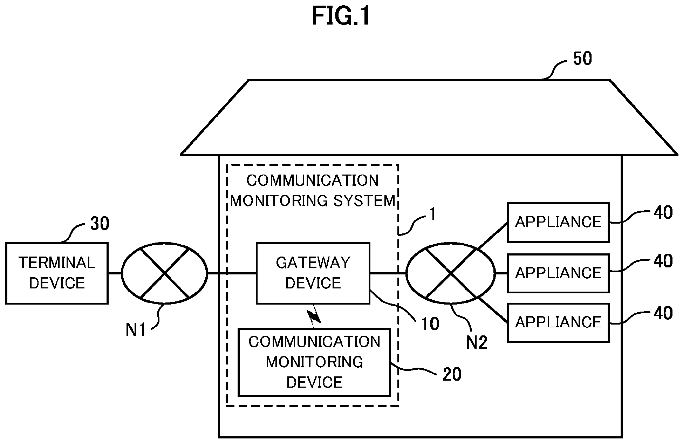

A description is given of a communication monitoring system 1 according to an embodiment of the present disclosure with reference to FIG. 1. The communication monitoring system 1 is a system that monitors data communicated (transmitted and received) between networks (the Internet N1 and an in-home network N2). As illustrated in FIG. 1, the communication monitoring system includes a gateway device 10 and a communication monitoring device 20.

The gateway device 10 is installed in a power distribution board or the like within a home 50, and relays data communicated between the Internet N1 and the in-home network N2. For example, the gateway device 10 transmits, to an appliance 40 within the home 50 and connected to the in-home network N2, instruction information (control command) for a remote control received from a terminal device 30 via the Internet N1. In addition, the gateway device 10 transmits, to the terminal device 30 connected to the Internet N1, status information received from the appliance 40 within the home 50 via the in-home network N2. Still further, in addition to such a relaying function, the gateway device 10 converts data to be relayed into optical signals, and outputs the optical signals to the communication monitoring device 20 as well. Note that the gateway device 10 may function as the controller for a Home Energy Management System (HEMS) that manages each appliance 40 within the home 50.

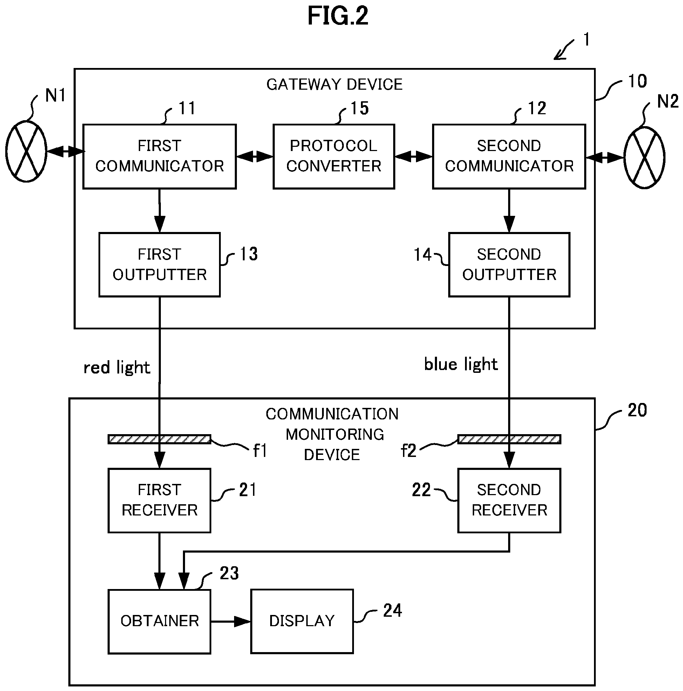

Next, the configuration of the gateway device 10 is described. As illustrated in FIG. 2, the gateway device 10 includes a first communicator 11, a second communicator 12, a first outputter 13, a second outputter 14, and a protocol converter 15.

The first communicator 11 includes a communication interface or the like for communication via the Internet N1, and communicates with the Internet N1. More specifically, the first communicator 11 outputs, to the protocol converter 15 and the first outputter 13, data or the like, received from the terminal device 30 via the Internet N1, for instructing a remote operation to the appliance 40. In addition, the first communicator 11 transmits data output by the protocol converter 15 to not only the terminal device 30 via the Internet N1 but also the first outputter 13.

The second communicator 12 includes a communication interface or the like for communication via the in-home network N2, and communicates with the in-home network N2. More specifically, the second communicator 12 outputs, to the protocol converter 15 and the second outputter 14, data indicating an operation status, and the like, received from the appliance 40 within the home 50 via the in-home network N2. In addition, the second communicator 12 transmits data output by the protocol converter 15 to not only the appliance 40 via the in-home network N2 but also the second outputter 14.

The first outputter 13 includes a light emitting diode (LED) that emits light (red light in this embodiment) with a predetermined wavelength (first wavelength). The first outputter 13 converts data communicated by the first communicator 11 with the Internet N1 into optical signals such as flashing red light, and outputs the optical signals to the exterior. Note that a table that defines correspondence relationships between data to be communicated and the corresponding optical signal (the flashing pattern) may be stored, and the first outputter 13 may refer to this table, and convert the data to be communicated into the optical signals.

The second outputter 14 includes a light emitting diode (LED) that emits light (blue light in this embodiment) with a predetermined wavelength (second wavelength) different from the first wavelength. The second outputter 14 converts data communicated by the second communicator 12 with the in-home network N2 into optical signals such as flashing blue light, and outputs the optical signals to the exterior.

The protocol converter 15 includes a Central Processing Unit (CPU), and the like, and converts a protocol format of obtained data from a relay originator network (the Internet N1 or the in-home network N2) into a protocol format corresponding to a relay destination network (the in-home network N2 or the Internet N1). For example, the protocol converter 15 converts the protocol format of data obtained by the first communicator 11 from the Internet N1 into the protocol format corresponding to the in-home network N2, and outputs the converted data to the second communicator 12. In addition, the protocol converter 15 converts the protocol format of data obtained by the second communicator 12 from the in-home network N2 into the protocol format corresponding to the Internet N1, and outputs the converted data to the first communicator 11.

Next, the communication monitoring device 20 is described. The communication monitoring device 20 is installed near the gateway device 10. The communication monitoring device 20 has a function of monitoring and outputting data relayed by the gateway device 10 in a real-time manner. As illustrated in FIG. 2, the communication monitoring device 20 includes a first receiver 21, a second receiver 22, an obtainer 23, and a display 24.

The first receiver 21 includes a photodiode, and is placed at a location capable of obtaining (receiving) optical signals output by the first outputter 13 of the gateway device 10. In addition, placed on the photo receiving surface of the first receiver 21 is a filter f1 that allows only the wavelength band of the optical signal (red light) output by the first outputter 13 to pass through. The first receiver 21 detects the optical signals output by the first outputter 13, and outputs the detected signals to the obtainer 23.

The second receiver 22 includes a photodiode, and is placed at a location capable of obtaining (receiving) optical signals output by the second outputter 14 of the gateway device 10. In addition, placed on the photo receiving surface of the second receiver 22 is a filter f2 that allows only the wavelength band of the optical signal (blue light) output by the second outputter 14 to pass through. The second receiver 22 detects the optical signals output by the second outputter 14, and outputs the detected signals to the obtainer 23.

The obtainer 23 includes a CPU, a Real-Time Clock (RTC), and the like, obtains, from the optical signals received by the first receiver 21 and the second receiver 22, data indicated by such optical signals, and outputs information (for example, a data name, a size, a type, and the like) relating to the obtained data to the display 24 together with the present clock time. More specifically, the obtainer 23 may refer to the table, or the like, that defines the correspondence relationship between the optical signal (flash pattern) and the data, and may obtain the data from the received optical signals.

For example, the obtainer 23 obtains, from the optical signals output by the first receiver 21, data communicated by the first communicator 11 of the gateway device 10 with the Internet N1, and outputs the data name together with the present clock time to the display 24. In addition, for example, the obtainer 23 obtains, from the optical signals output by the second receiver 22, data communicated by the second communicator 12 of the gateway device 10 with the in-home network N2, and outputs the data name together with the present clock time to the display 24.

The display 24 is a display device such as a Liquid Crystal Display (LCD), and displays information output by the obtainer 23.

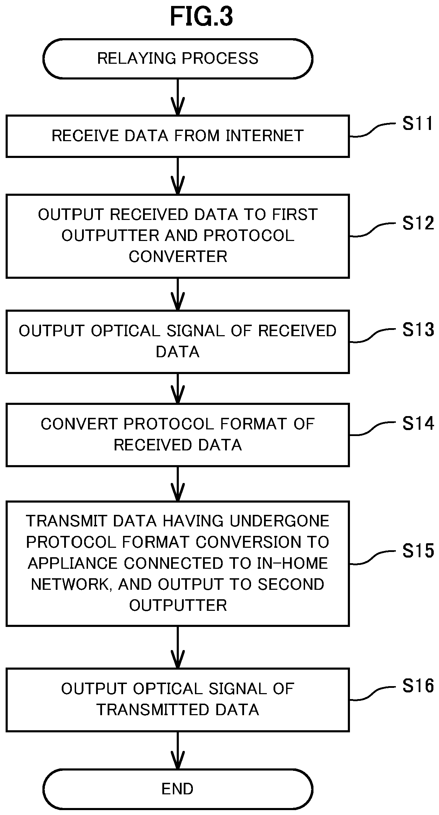

Next, an operation of the above gateway device 10 is described. FIG. 3 is a flowchart illustrating a procedure of a relaying process of relaying data from the Internet N1 to the in-home network N2.

The terminal device 30 transmits, via the Internet N1, data such as a command that instructs a remote operation for the appliance 40 within the home 50. When the first communicator 11 of the gateway device 10 receives this data from the Internet N1 (step S11), the first communicator 11 outputs this data to the first outputter 13 and the protocol converter 15 (step S12).

The first outputter 13 converts the data output by the first communicator 11 into optical signals, and outputs the optical signals to the communication monitoring device 20 (step S13). The first receiver 21 of the communication monitoring device 20 receives the optical signals, the obtainer 23 obtains original data prior to the conversion from the optical signals, and the display 24 displays the data name and the like.

Conversely, the protocol converter 15 converts the format of the data output by the first communicator 11 into the protocol format corresponding to the in-home network N2 (step S14). Note that in the flowchart that is FIG. 3, although the process in the step S14 is executed after the step S13, the process in the step S13 and the process in the step S14 are executed substantially at the same time.

Next, the second communicator 12 transmits, to the appliance 40 subjected to the remote operation and connected to the in-home network N2, the data having undergone the protocol format conversion by the protocol converter 15, and also outputs this data to the second outputter 14 (step S15). The appliance 40 that has received this data runs under the remote operation instructed from the terminal device 30.

Subsequently, the second outputter 14 converts the data output by the second communicator 12 into optical signals, and outputs the optical signals to the communication monitoring device 20 (step S16). The second receiver 22 of the communication monitoring device 20 receives the optical signals, the obtainer 23 obtains the original data prior to the conversion from the optical signals, and the display 24 displays the data name and the like.

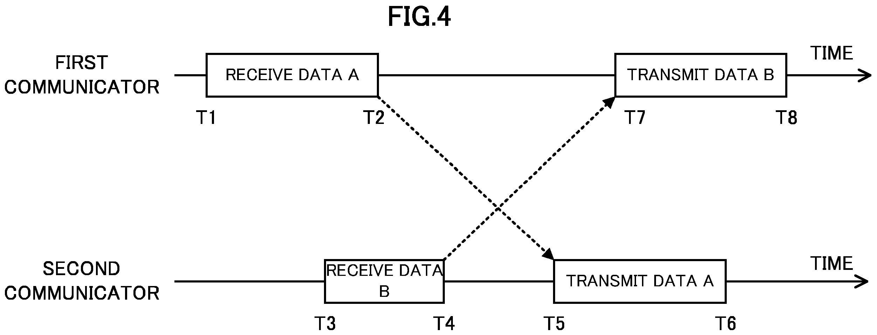

Next, the above relaying process is described with reference to a specific example. FIG. 4 is a diagram illustrating a timing at which the first communicator 11 of the gateway device 10 and the second communicator 12 thereof relay data A and data B from the Internet N1 to the in-home network N2 or from the in-home network N2 to the Internet N1.

First, the first communicator 11 receives the data A from the Internet N1 between times T1 and T2. Note that the larger the size of the data A is, or the slower the communication speed is, the longer the necessary time (times between T1 and T2) for receiving the data A becomes. In addition, during this time period, the first communicator 11 outputs the receiving data A to the protocol converter 15 and the first outputter 13, and the first outputter 13 converts the data A into optical signals (red light) with a predetermined wavelength, and outputs the optical signals. In the communication monitoring device 20, the first receiver 21 receives the optical signals. Next, the obtainer 23 obtains the original data A from the optical signals, and the display 24 displays information such as the data name and the like, together with the time at which the optical signals are received. When the first communicator 11 starts receiving the data A, the data A is immediately converted into optical signals and output by the first outputter 13, and thus the time displayed on the display 24 together with the information such as the data name and the like, in this case is substantially equal to the receiving start time T1 of the data A.

Conversely, the second communicator 12 receives the data B from the in-home network N2 between times T3 and T4. In addition, within this time period, the second communicator 12 outputs the receiving data B to the protocol converter 15 and the second outputter 14. In this case, the time period (times between T3 and T4) during which the data B is being received partially overlaps with the time period (times between T1 and T2) during which the first communicator 11 is receiving the data A. Hence, during such a time period (times between T3 and T2), the gateway device 10 is in a state in which the data A and B are being received from both the Internet N1 and the in-home network N2 at the same time. Even in this case, however, the second outputter 14 that is separately provided from the first outputter 13 converts the data B received by the second communicator 12 into optical signals (blue light) with the predetermined wavelength, and outputs the optical signals in a real-time manner. In the communication monitoring device 20, the second receiver 22 receives the optical signals. Next, the obtainer 23 obtains the original data B from the received optical signals, and the display 24 displays information such as the data name and the like, together with the clock time at which the optical signals are received. Note that when the second communicator 12 starts receiving the data B, the data B is immediately converted into optical signals, and is output by the second outputter 14, and thus the clock time displayed on the display 24 together with the information such as the data name and the like, is substantially equal to the receiving start time T3 of the data B.

Next, the second communicator 12 transmits, to the in-home network N2 between times T5 and T6, the data A having undergone the protocol format conversion for the in-home network N2 by the protocol converter 15, and also outputs the data A to the second outputter 14. Next, the second outputter 14 converts this data A into optical signals (blue light) with the predetermined wavelength, and outputs the optical signals. In the communication monitoring device 20, the second receiver 22 receives the optical signals. Subsequently, the obtainer 23 obtains the original data A from the received optical signals, and the display 24 displays information such as the data name and the like, together with the clock time at which the optical signals are received. Note that when the second communicator 12 starts receiving the data A, the data A is immediately converted into optical signals, and is output by the second outputter 14, and thus the clock time displayed on the display 24 together with the information such as the data name and the like, is substantially equal to the transmitting start time T5 of the data A.

Conversely, the first communicator 11 transmits, between times T7 and T8 to the Internet N1, the data B having undergone the protocol format conversion for the Internet N1 by the protocol converter 15, and also outputs this data B to the first outputter 13. In this case, the time period (times between T7 and T8) during which the data B is being transmitted partially overlaps with the time period (times between T5 and T6) during which the second communicator 12 is transmitting the data A. Hence, during such a time period (times between T7 and T6), the gateway device 10 is in a state in which the data A and B are being transmitted from both the in-home network N2 and the Internet N1 at the same time. Even in this case, however, the first outputter 13 that is separately provided from the second outputter 14 converts the data B transmitted by the first communicator 11 into optical signals (red light) with the predetermined wavelength, and outputs the optical signals in a real-time manner. In the communication monitoring device 20, the first receiver 21 receives the optical signals. Next, the obtainer 23 obtains the original data B from the received optical signals, and the display 24 displays information such as the data name and the like, together with the clock time at which the optical signals are received. Note that when the first communicator 11 starts transmitting the data B, the data B is immediately converted into optical signals, and is output by the first outputter 13, and thus the clock time displayed on the display 24 together with the information such as the data name and the like, is substantially equal to the transmitting start time T7 of the data B.

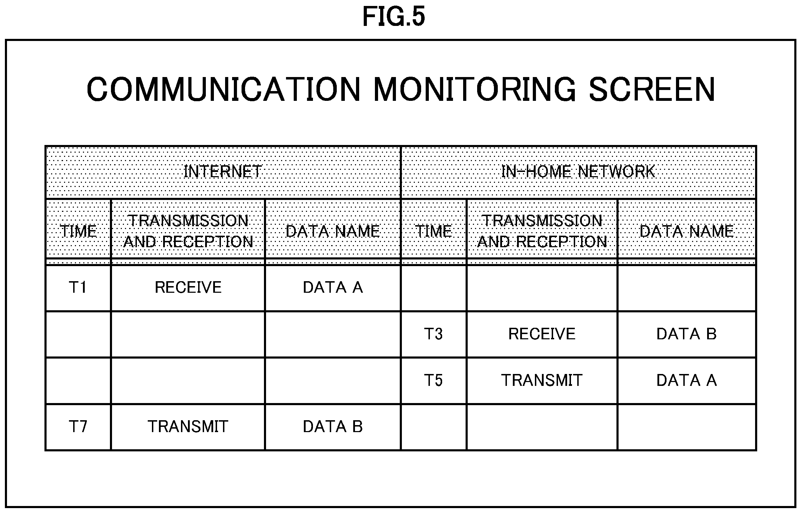

Eventually, according to this specific example, the display 24 of the communication monitoring device 20 displays a communication monitoring screen as illustrated in FIG. 5. A user is capable of easily checking, in a real-time manner, whether or not the gateway device 10 is properly relaying the data by checking this communication monitoring screen.

As described above according to this embodiment, when the gateway device 10 relays data between networks, the relayed data is converted into optical signals with a different wavelength for each network, and is output. Next, by the communication monitoring device 20, the data relayed by the gateway device 10 is obtained from such optical signals, and information relating to the data is displayed. Hence, by simply installing the single communication monitoring device 20 near the gateway device 10 without a necessity for connecting multiple measuring instruments like a protocol analyzer to the gateway device 10, relayed data can be easily monitored without performing time-consuming wiring tasks and without incurring additional costs.

In addition, according to this embodiment, the outputters (the first outputter 13 and the second outputter 14) of the gateway device 10 which are provided separately for the respective networks output optical signals having different wavelengths. Hence, even if the gateway device 10 is transmitting and receiving the data relative to the respective networks at the same time, each outputter outputs an optical signal corresponding to the data, and the communication monitoring device 20 is capable of monitoring information relating to the data in a real-time manner.

Still further, according to this embodiment, the optical signals output by each outputter of the gateway device 10 are visible-range optical signals that are different in color. Hence, by checking the color of the optical signal output by the gateway device 10, the user is capable of intuitively knowing the present communication status.

### (Modified Examples)

The present disclosure is not limited to the above embodiment, and various modifications can be made without departing from the scope of the present disclosure.

For example, in the above embodiment, the description is given of the gateway device 10 that relays data between the Internet N1 and the in-home network N2, but the present disclosure is also applicable to a gateway device that relays data between other different networks. In addition, the present disclosure is applicable to a gateway device that relays data between two or more networks. Note that, in such a case, there is a necessity to place the outputters of the gateway device and the receivers of the communication monitoring device in accordance with the number of corresponding networks.

Still further, according to the embodiment, the description is given of the gateway device 10 having the first outputter 13 that outputs red optical signals, and the second outputter 14 that outputs blue optical signals, but the colors of the optical signals output by the first outputter 13 and the second outputter 14 are freely selectable as long as the colors selected are different from each other. Yet still further, the first outputter 13 and the second outputter 14 may output optical signals having different wavelengths outside the visible range.

Moreover, in the above embodiment, although the display 24 of the communication monitoring device 20 displays information relating to the data relayed by the gateway device 10, those information may be transmitted and output to a Personal Computer (PC), a smartphone, and the like of the user, in the form of a mail or the like.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure is appropriately applicable to systems like a HEMS.

### Reference Signs List

- 1: Communication monitoring system
- 10: Gateway device
- 20: Communication monitoring device
- 30: Terminal device
- 40: Appliance
- 50: Home
- N1: Internet
- N2: In-home network
- 11: First communicator
- 12: Second communicator
- 13: First outputter
- 14: Second outputter
- 15: Protocol converter
- 21: First receiver
- 22: Second receiver
- 23: Obtainer
- 24: Display
- f1, f2: Filter

## Claims

1. A communication monitoring system comprising:
a gateway device for relaying data that is communicated between a first network and a second network; and
a communication monitoring device,
wherein the gateway device comprises:
a first communicator configured to communicate data with the first network;
a second communicator configured to communicate data with the second network;
a first outputter configured to convert the data communicated by the first communicator into an optical signal having a first wavelength and to output the optical signal; and
a second outputter configured to convert the data communicated by the second communicator into an optical signal having a second wavelength different from the first wavelength and to output the optical signal, and
wherein the communication monitoring device comprises:
a first receiver configured to receive the optical signal output by the first outputter;
a second receiver configured to receive the optical signal output by the second outputter; and
a display configured to display information relating to the data obtained from the optical signal received by the first receiver and the optical signal received by the second receiver.

2. The communication monitoring system according to claim 1, wherein the first outputter and the second outputter are each configured to output the optical signal in a visible range.

3. The communication monitoring system according to claim 1 or 2, wherein the first outputter and the second outputter each comprise a light emitting diode.

4. The communication monitoring system according to any one of claims 1 to 3, wherein the first receiver and the second receiver each comprise a photodiode.

5. A gateway device for relaying data that is communicated between a first network and a second network, the gateway device comprising:
a first communicator configured to communicate data with the first network;
a second communicator configured to communicate data with the second network;
a first outputter configured to convert the data communicated by the first communicator into an optical signal having a first wavelength and to output the optical signal; and
a second outputter configured to convert the data communicated by the second communicator into an optical signal having a second wavelength different from the first wavelength and to output the optical signal.

6. A communication monitoring device comprising:
a first receiver configured to receive an optical signal that has a first wavelength and is output by a gateway device;
a second receiver configured to receive an optical signal that has a second wavelength different from the first wavelength and is output by the gateway device; and
a display configured to display information relating to data obtained from the optical signal received by the first receiver and the optical signal received by the second receiver.
